# EUROPÄISCHE PATENTSCHRIFT

(11) **EP 0 893 610 B1**
(45) Veröffentlichungstag und Bekanntmachung des Hinweises auf die Patenterteilung: **04.07.2001**
(21) Anmeldenummer: 98110296.5
(22) Anmeldetag: 05.06.1998
(51) Int. Cl.: F16B 13/06

(54) **Spreizdübel**
Expansion dowel
Cheville d'expansion

(30) Priorität: 23.07.1997 DE 29713072 U
(43) Veröffentlichungstag der Anmeldung: 27.01.1999
(73) Patentinhaber: fischerwerke Artur Fischer GmbH & Co. KG, D-72178 Waldachtal (DE)
(72) Erfinder: Striebich, Jürgen, Dipl.-Ing., 72160 Horb (DE); Hengesbach, Wolfgang, Dipl.-Ing., 72280 Dornstetten (DE)

(56) Entgegenhaltungen:
- EP-A- 0 724 085
- DE-A- 2 256 822
- DE-U- 29 501 182
- GB-A- 1 354 958

## Beschreibung

Die Erfindung betrifft einen Spreizdübel zur Verankerung in einem Bohrloch in einem Mauerwerk mit den Merkmalen des Oberbegriffs des Anspruchs 1.

Aus der GB-A-13 54 958 ist ein derartiger Spreizdübel bekannt. Der bekannte Spreizdübel weist einen zylindrischen, Verdrehsicherungseinrichtungen aufweisenden Dübelschaft mit einem konischen Spreizkörper an seinem vorderen Ende auf, wobei ein verjüngtes Ende des Spreizkörpers dem Dübelschaft zugewandt ist. Am verjüngten Ende des Spreizkörpers ist eine Spreizhülse den Dübelschaft bzw. den Spreizkörper umgreifend aufgesetzt, die bei einer axialen Verschiebung des Dübelschaftes durch den Spreizkörper aufgespreizt wird. Bei den mit einer Verdrehsicherungseinrichtung versehenen Spreizdübeln erfolgt die axiale Verschiebung zwischen Spreizhülse und Dübelschaft ausschließlich über eine Zuglast, die keine Torsionsspannungen im Dübelschaft bewirkt. Die am Dübelschaft angeordnete Verdrehsicherungseinrichtung dient lediglich dazu, das Mitdrehen des Spreizdübels beim Eindrehen einer Gewindestange zum Anhängen einer Last an den Spreizdübel zu verhindern. Die bei dem bekannten Spreizdübel vorgesehenen Verdrehsicherungseinrichtungen sind als Kerben ausgebildet, die zum vorderen Dübelschaftende spitz auslaufen, so daß bei einer axialen Verschiebung die Kerben außer Eingriff kommen. Damit ist die Verdrehsicherungseinrichtung nur wirksam vor der zur Verankerung des Spreizdübels erforderlichen Axialverschiebung zwischen Spreizhülse und Dübelschaft.

Aus der DE-A-22 56 822 ist ein Spreizdübel mit einer Verdrehsicherungseinrichtung bekannt, die zwischen der Spreizhülse und dem Spreizkörper bzw. dem im Durchmesser reduzierten Zwischenabschnitt des Dübelschaftes wirksam ist. Eine solche Verdrehsicherung verhindert zwar das Mitdrehen des Dübelschaftes, sofern die Spreizhülse im Bohrloch festsitzt, nicht jedoch die Belastung des Dübelschaftes im Bereich des Zwischenabschnittes von überhöhten Torsionsspannungen.

Der Erfindung liegt die Aufgabe zugrunde, einen Spreizdübel der eingangs genannten Art so weiterzubilden, daß eine Torsionsbeanspruchung am im Durchmesser reduzierten Zwischenabschnitt verringert ist.

Diese Aufgabe wird erfindungsgemäß durch die Merkmale des Anspruchs 1 gelöst. Der erfindungsgemäße Spreizdübel weist eine Verdrehsicherungseinrichtung auf, die als nach außen stehende, in etwa in Längsrichtung des Dübelschaftes verlaufende Rippe ausgebildet ist, die an einem am Dübelschaft ausgebildeten Radialbund angeordnet ist. Dadurch wird das auf den Dübelschaft wirkende Torsionsmoment im Bereich der Verdrehsicherungseinrichtung vollständig oder zumindest zum Teil abgebaut, so daß an dem im Durchmesser reduzierten Zwischenabschnitt des Dübelschaftes, insbesondere an den Übergängen kein oder nur ein verringertes Torsionsmoment wirkt.

Der erfindungsgemäße Spreizdübel hat den Vorteil, daß beim Einziehen des Spreizkörpers in die Spreizhülse auftretende Materialspannungen verringert sind, so daß ein am Einziehgewinde aufgebrachtes Einziehmoment und eine Einziehkraft des Spreizkörpers in die Spreizhülse vergrößert werden können. Die Gefahr einer Rißbildung und eines Abreißens des Spreizkörpers im Bereich des Zwischenabschnitts ist verringert.

Vorzugsweise wird die Verdrehsicherungseinrichtung durch zwei sich gegenüberliegende am Radialbund angeordnete Rippen gebildet. Die Rippen graben sich beim Eintreiben des Spreizdübels in das Bohrloch in das Mauerwerk ein und bilden dabei in Längsrichtung verlaufende Furchen. Bei der axialen Verschiebung zwischen Spreizhülse und Dübelschaft während des Spreizvorganges bleiben die Rippen in Eingriff in den Furchen, so daß während des gesamten Spreizvorganges die Verdrehsicherungseinrichtung wirksam ist.

Bei einer Ausgestaltung des erfindungsgemäßen Spreizdübels weist dessen Dübelschaft ein Untermaß in Bezug auf einen Nenndurchmesser des Bohrlochs auf, das zur Verankerung des Spreizdübels im Mauerwerk angebracht ist. Dies hat den Vorteil, daß keine Reibungskraft zwischen Dübelschaft und Mauerwerk auftritt, die einen Teil der am Einziehgewinde zum Einziehen des Spreizkörpers in die Spreizhülse aufgebrachten Zugkraft über die Länge des Dübelschafts abbaut. Da diese Reibungskraft in Folge von Bohrlochtoleranzen und abhängig vom Werkstoff des Mauerwerks unterschiedlich ist, führt sie zu Streuungen der Einzieh- und damit auch der Verankerungskraft des Spreizdübels im Bohrloch bei gleichem Einziehmoment am Einziehgewinde. Das Untermaß des Dübelschafts in Bezug auf das Bohrloch hat den Vorteil gleichmäßiger Einzieh- und Verankerungskräfte. Dabei ist der Begriff Untermaß nicht streng zu sehen, der Dübelschaft kann bei engen Bohrlöchern am unteren Toleranzbereich durchaus mit geringer Reibung am Mauerwerk anliegen, was genau genommen bereits eine Übergangspassung ist.

Bei Ausgestaltungen der Erfindung verjüngt sich der Dübelschaft am Übergang zum Spreizkörper. Um in diesem Bereich Spannungsspitzen zu vermeiden, ist der Übergang nicht als Ringstufe mit umlaufenden, nahezu rechtwinkligen Kanten ausgebildet, sondern der Übergang ist beispielsweise als Konus ausgebildet oder weist eine konkave, umlaufende Rundung auf. Auch eine Fase an einer Kehlung einer Ringstufe verringert Spannungsspitzen, die zur Rißbildung und zum Abriß des Spreizkörpers führen können.

Die Erfindung wird nachfolgend anhand eines in der Zeichnung dargestellten Ausführungsbeispiels näher erläutert. Es zeigen:
- Figur 1: einen erfindungsgemäßen in ein Bohrloch eingesetzten Spreizdübel vor dem Aufspreizen einer Spreizhülse; und
- Figur 2: einen Querschnitt entlang Linie II-II in Figur 1.

Der erfindungsgemäße, insgesamt mit 10 bezeichnete, in der Zeichnung dargestellte Spreizdübel, weist einen zylindrischen Dübelschaft 12 auf. Ein hinteres Ende des Dübelschafts 12 ist mit einem Einziehgewinde 14 versehen, dessen Außendurchmesser etwas größer als ein Durchmesser des Dübelschafts 12 ist. An seinem vorderen Ende weist der Dübelschaft 12 einen konischen Spreizkörper 16 auf, dessen verjüngtes Ende dem Dübelschaft 12 zugewandt ist. Über einen zylindrischen Zwischenabschnitt 18, dessen Durchmesser mit einem Durchmesser des verjüngten Endes des Spreizkörpers 16 übereinstimmt, ist der Dübelschaft 12 einstückig mit dem Spreizkörper 16. Der Dübelschaft 12 hat einen etwas geringeren Durchmesser als ein Durchmesser des größeren Endes des Spreizkörpers 16, der in etwa mit dem Außendurchmesser des Einziehgewindes 14 übereinstimmt.

Auf den Zwischenabschnitt 18 ist eine diesen umgreifende Spreizhülse 20 aufgesetzt, die einen durchgehenden Längsschlitz 22 aufweist. Ein Übergang 24 vom Zwischenabschnitt 18 zum Dübelschaft 12 ist konkav gerundet.

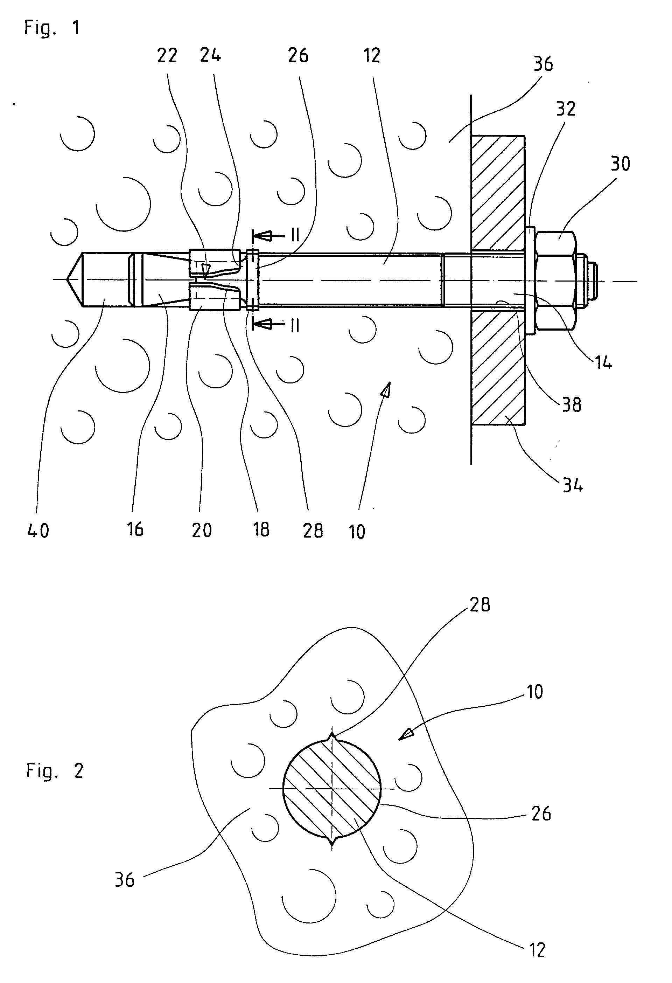

Als Verdrehsicherungseinrichtung weist der Dübelschaft 12 einen niedrigen Radialbund 26 auf, an den sich der Übergang 24 anschließt. Der Radialbund 26 ist mit zwei nach außen abstehenden, in Längsrichtung verlaufenden Rippen 28 an einander gegenüberliegenden Stellen versehen (Figur 2). Die Rippen 28 stehen radial über das Ende größeren Durchmessers des Spreizkörpers 16 und über den Außendurchmesser des Einziehgewindes 14 vor.

Zum Einziehen des Spreizkörpers 16 in die Spreizhülse 20 ist eine Mutter 30 auf das Einziehgewinde 14 aufgeschraubt, der eine Unterlegscheibe 32 unterlegt ist.

Zur Befestigung eines Gegenstandes, beispielsweise einer Konsole 34, an einem Mauerwerk 36 wird der erfindungsgemäße Spreizdübel 10 mit dem Spreizkörper 16 voran durch ein Loch 38 in der Konsole 34 in ein zuvor im Mauerwerk 36 angebrachtes Bohrloch 40 eingeführt. Beim Einführen oder auch Eintreiben in das Bohrloch 40 dringen die Rippen 28 in das Mauerwerk 36 ein, sie bilden eine Verdrehsicherungseinrichtung des Spreizdübels 10. Die Spreizhülse 20 wird beim Einführen des Spreizdübels 10 in das Bohrloch 40 elastisch radial zusammengedrückt, d.h. sie klemmt im Bohrloch 40. Das Bohrloch 40 weist, abhängig von seiner Toleranz, in etwa einen mit dem Durchmesser des größeren Endes des Spreizkörpers 16 und dem Außendurchmesser des Einziehgewindes 14 übereinstimmenden Durchmesser auf. Das Bohrloch 40 hat also Übermaß in Bezug auf den Dübelschaft 12.

Nach dem Einsetzen des Spreizdübels 10 in das Bohrloch 40 wird die Mutter 30 angezogen und dadurch der Spreizkörper 16 in die Spreizhülse 20 eingezogen. Die Klemmkraft der Spreizhülse 20 im Bohrloch 40 verhindert, daß der Spreizkörper 16 die Spreizhülse 20 aus dem Bohrloch 40 herauszieht. Die Spreizhülse 20 wird vom Spreizkörper 16 radial aufgespreizt und der Spreizdübel 10 auf diese Weise im Mauerwerk 36 verankert.

Durch das Anziehen der Mutter 30 wirkt ein Torsionsmoment auf den Dübelschaft 12, welches die Rippen 28 der Verdrehsicherungseinrichtung 26, 28 auf das Mauerwerk 36 übertragen. Auf diese Weise ist der Spreizdübel 10 am Übergang 24 vom Durchmesser des Dübelschafts 12 auf den kleineren Durchmesser des Zwischenabschnitts 18 bzw. des verjüngten Endes des Spreizkörpers 16 frei von einer Torsionsbeanspruchung, von der Verdrehsicherungseinrichtung 26, 28 bis einschließlich des Spreizkörpers 16 wirken ausschließlich Zugkräfte auf den Spreizdübel 10. Zur Vermeidung von Spannungsspitzen ist der Übergang 24 konkav gerundet ausgebildet.

## Patentansprüche

1. Spreizdübel (10) zur Verankerung in einem Bohrloch (40) in einem Mauerwerk, mit einer Spreizhülse (20) und einem Dübelschaft (12), der an seinem vorderen Ende einen die Spreizhülse (20) aufnehmenden Zwischenabschnitt (18) mit einem sich daran anschließenden Spreizkörper (16) aufweist, welcher über den Dübelschaft (12) in die Spreizhülse (20) einziehbar ist und dabei die Spreizhülse (20) aufspreizt, wobei der Dübelschaft (12) eine radial überstehende Verdrehsicherungseinrichtung (26, 28) aufweist, **dadurch gekennzeichnet,** dass die Verdrehsicherungseinrichtung (26, 28) als nach außen stehende, in etwa in Längsrichtung des Dübelschaftes (12) verlaufende Rippe (28) ausgebildet ist, die an einem am Dübelschaft (12) ausgebildeten Radialbund (26) angeordnet ist.

2. Spreizdübel nach Anspruch 1, **dadurch gekennzeichnet,** daß der Dübelschaft (12) ein Untermaß in Bezug auf einen Nenndurchmesser des Bohrlochs (40) aufweist.

3. Spreizdübel nach Anspruch 1, **dadurch gekennzeichnet,** daß der Dübelschaft (12) ein Einziehgewinde (14) zum Einziehen des Spreizkörpers (16) in die Spreizhülse (20) aufweist.

4. Spreizdübel nach Anspruch 1, **dadurch gekennzeichnet,** daß der Spreizdübel (10) eine kontinuierliche Verjüngung am Übergang (24) vom Dübelschaft (12) zum Spreizkörper (16) aufweist.

## Claims

1. Expansible fixing plug (10) for anchoring in a hole (40) drilled in masonry, having an expansible sleeve (20) and a fixing plug shank (12), which shank at its leading end has an intermediate portion (18) receiving the expansible sleeve (20) and adjoining the intermediate portion an expander body (16) that is arranged to be drawn by means of the fixing plug shank (12) into the expansible sleeve (20) and in so doing expands the expansible sleeve (20), the fixing plug shank (12) having a radially projecting anti-rotation means (26, 28), **characterised in that** the anti-rotation means (26, 28) is in the form of an outwardly projecting rib (28) running approximately in the longitudinal direction of the fixing plug shank (12), which rib is arranged on a radial collar (26) formed on the fixing plug shank (12).

2. Expansible fixing plug according to claim 1, **characterised in that** the fixing plug shank (12) is undersize in relation to a nominal diameter of the drilled hole (40).

3. Expansible fixing plug according to claim 1, **characterised in that** the fixing plug shank (12) has a drawing-in thread (14) for drawing the expander body (16) into the expansible sleeve (20).

4. Expansible fixing plug according to claim 1, **characterised in that** the expansible fixing plug (10) has a continuous taper at the transition (24) from the fixing plug shank (12) to the expander body (16).

## Revendications

1. Cheville d'expansion (10) destinée à l'ancrage dans un perçage (40) pratiqué dans une maçonnerie, comprenant une douille expansible (20) et un fût (12) présentant, à son extrémité antérieure, une région intercalaire (18) qui reçoit la douille expansible (20) et à laquelle se rattache un corps d'écartement (16) pouvant être enfoncé dans la douille expansible (20) par l'intermédiaire du fût (12) de la cheville, et déployant alors ladite douille expansible (20), le fût (12) de la cheville présentant un système (26, 28) de verrouillage antirotation, qui dépasse dans le sens radial, caractérisée par le fait que ledit système (26, 28) de verrouillage antirotation est réalisé sous la forme d'une nervure (28) saillant vers l'extérieur, s'étendant sensiblement dans le sens longitudinal du fût (12) de la cheville, et disposée sur un collet radial (26) ménagé sur ledit fût (12) de la cheville.

2. Cheville d'expansion selon la revendication 1, caractérisée par le fait que le fût (12) de ladite cheville accuse un sous-dimensionnement par rapport à un diamètre nominal du perçage (40).

3. Cheville d'expansion selon la revendication 1, caractérisée par le fait que le fût (12) de ladite cheville présente un filetage d'enfoncement (14), en vue de l'enfoncement du corps d'écartement (16) dans la douille expansible (20).

4. Cheville d'expansion selon la revendication 1, caractérisée par le fait que ladite cheville d'expansion (10) possède un rétrécissement continu à la transition (24) comprise entre le fût (12) de la cheville et le corps d'écartement (16).
